# EUROPEAN PATENT APPLICATION

(11) **EP 3 745 312 A1**
(43) Date of publication of application: **02.12.2020**
(21) Application number: 19744318.7
(22) Date of filing: 09.01.2019
(51) Int. Cl.: G06N 3/04, G10L 15/16, G10L 21/0388, G10L 25/30

(54) **NEURAL NETWORK PROCESSING DEVICE AND METHOD, AND PROGRAM**

(30) Priority: 23.01.2018 JP 2018008547
(71) Applicant: Sony Corporation, 108-0075 Tokyo (JP)
(72) Inventor: YAMAMOTO Yuki, Tokyo 108-0075 (JP)
(74) Representative: 2SPL Patentanwälte PartG mbB
(86) International application number: PCT/JP2019/000280
(87) International publication number: WO 2019/146398

(57) **Abstract**

The present technology relates to a neural network processing apparatus, a neural network processing method, and a program that make it possible to reduce a memory amount.
A neural network processing apparatus includes an operation processor that configures a neural network and performs operation processing on each frame of input data, the operation processing being processing in which a processing boundary of a specified frame of the input data for the operation processing and a processing boundary of another frame of the input data for the operation processing coincide, the other frame being different from the specified frame. The present technology is applicable to the neural network processing apparatus.

## Description

### Technical Field

The present technology relates to a neural network processing apparatus, a neural network processing method, and a program, and, in particular, to a neural network processing apparatus, a neural network processing method, and a program that make it possible to reduce a memory amount.

### Background Art

Conventionally, automatic discrimination technologies such as discrimination processing performed on audio data, such as speech recognition, speaker identification, and environmental sound identification; and discrimination processing performed on image data, such as image recognition, are known.

Methods using linear discrimination, a decision tree, a support-vector machine, or a neural network have been proposed as methods for performing such discrimination processing (for example, refer to Non-Patent Patent Literature 1 and Non-Patent Patent Literature 2).

For example, in discrimination processing using a neural network, data is input to a discriminator having a neural network structure that is obtained by performing learning in advance, and operation such as convolution processing, pooling processing, and residual processing that are performed on the data, is performed by the discriminator. Then, a result of the operation performed by the discriminator is output as a result of discrimination performed on the input data.

### Citation List

### Non-Patent Literature

Non-Patent Literature 1: Kevin P. Murphy, Machine Learning: A Probabilistic Perspective, The MIT Press, 2012
Non-Patent Literature 2: Ian Goodfellow, Yoshua Bengio, and Aaron Courville, Deep Learning, The MIT Press, 2016

### Disclosure of Invention

### Technical Problem

In recent years, there is a demand that a function related to automatic discrimination be installed in portable apparatuses such as a smartphone and headphones. For this reason, a memory amount that is necessary when discrimination processing is performed using, for example, a neural network, is desired to be reduced.

The present technology has been made in view of the circumstances described above and it is an object thereof to makes it possible to reduce a memory amount.

### Solution to Problem

A neural network processing apparatus of a first aspect of the present technology includes an operation processor that configures a neural network and performs operation processing on each frame of input data, the operation processing being processing in which a processing boundary of a specified frame of the input data for the operation processing and a processing boundary of another frame of the input data for the operation processing coincide, the other frame being different from the specified frame.

A neural network processing method and a program of the first aspect of the present technology are a neural network processing method and a program that correspond to the neural network processing apparatus of the first embodiment of the present technology.

In the first aspect of the present technology, operation processing is performed by the operation processor configuring a neural network with respect to each frame of input data, the operation processing being processing in which a processing boundary of a specified frame of the input data for the operation processing and a processing boundary of another frame of the input data for the operation processing coincide, the other frame being different from the specified frame.

A neural network processing apparatus of a second aspect of the present technology includes a decoder that performs decoding processing of decoding a compression-encoded filter coefficient of a filter; and an operation processor that configures a neural network and performs convolution processing of convolving the filter coefficient obtained by performing the decoding processing, and input data.

A neural network processing method and a program of the second aspect of the present technology are a neural network processing method and a program that correspond to the neural network processing apparatus of the second embodiment of the present technology.

In the second aspect of the present technology, decoding processing of decoding a compression-encoded filter coefficient of a filter is performed by the decoder; and
convolution processing of convolving the filter coefficient obtained by performing the decoding processing, and input data, is performed by the operation processor configuring a neural network.

### Advantageous Effects of Invention

The first and second aspects of the present technology make it possible to reduce a memory amount.

Note that the effect described here is not necessarily limitative, and any of the effects described in the present disclosure may be provided.

### Brief Description of Drawings

[Fig. 1] Fig. 1 is a diagram describing a neural network.
[Fig. 2] Fig. 2 is a diagram describing convolution processing and pooling processing.
[Fig. 3] Fig. 3 is a diagram describing frame processing.
[Fig. 4] Fig. 4 is a diagram describing a discriminator having a neural network structure to which the present technology is applied.
[Fig. 5] Fig. 5 is a diagram describing a discriminator having a neural network structure to which the present technology is applied.
[Fig. 6] Fig. 6 is a diagram describing compression-encoding of a filter coefficient.
[Fig. 7] Fig. 7 illustrates an example of a configuration of a neural network processing apparatus.
[Fig. 8] Fig. 8 is a flowchart describing discrimination processing.
[Fig. 9] Fig. 9 illustrates an example of a configuration of a computer.

### Mode(s) for Carrying Out the Invention

Embodiments to which the present technology is applied will now be described below with reference to the drawings.

### <First Embodiment>

### <Regarding Present Technology>

The present technology makes it possible to reduce a memory amount by causing processing boundaries of a current frame and a previous frame for operation processing to coincide upon performing the operation processing, such as convolution processing, on input data for each frame when discrimination processing or regression processing is performed using a neural network.

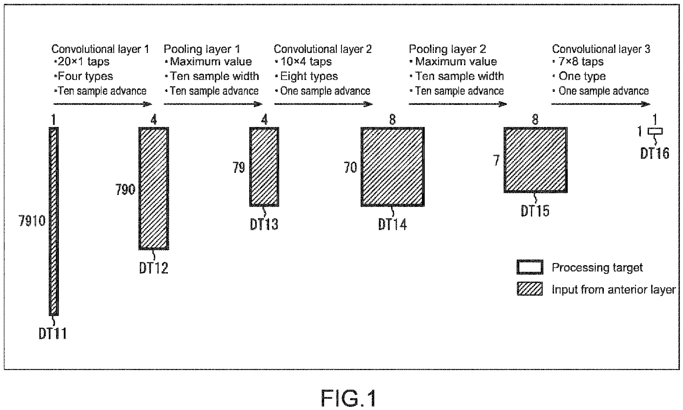

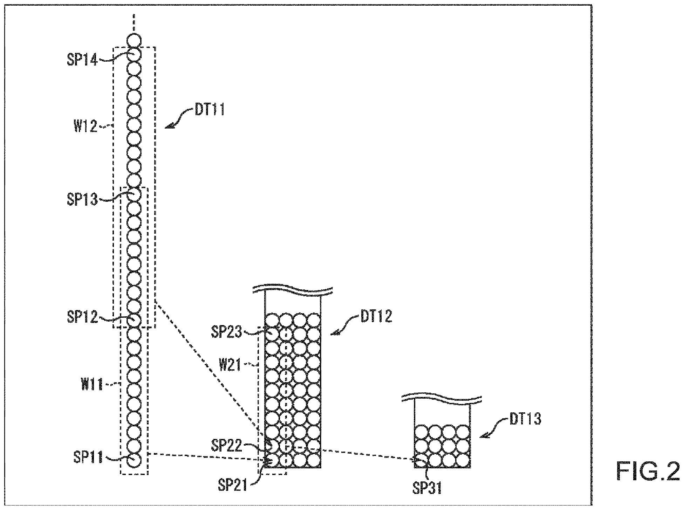

First, referring to Figs. 1 and 2, a discriminator is described that performs discrimination processing on audio data in a certain time interval using a neural network, where the audio data is input. Note that a portion in Fig. 1 and a portion in Fig. 2 that correspond to each other will be denoted by the same reference symbol and a description thereof will be omitted as appropriate.

Fig. 1 illustrates a configuration of a discriminator having a neural network structure that performs discrimination processing on input audio data and outputs a result of the discrimination.

In Fig. 1, each rectangle represents a shape of data. In particular, in the illustration of each piece of data, the longitudinal direction represents a time direction, and the lateral direction represents a dimension. Further, the arrows extending in the lateral direction in the figure represent data conversion. Here, a data shape of each piece of data is determined by the number of dimensions of the piece of data and the number of pieces of data in each dimension (the number of data samples).

For example, leftmost rectangular input data DT11 in the figure is audio data that is input to the discriminator having a neural network structure.

Here, in the illustration of the input data DT11, the longitudinal direction represents a time direction, and the lateral direction represents a dimension. In particular, in the illustration of the input data DT11, the downward direction represents a direction of a newer point in time (a future direction).

The input data DT11 is audio data corresponding to one channel in a time interval corresponding to 7910 samples. In other words, the input data DT11 is audio data corresponding to one channel that includes sample values of 7910 samples (time samples).

Thus, here, the channel of audio data corresponds to the dimension of the input data DT11, and the shape of the input data DT11 is represented by one dimension × 7910 samples. Further, the sample situated in an upper position in the illustration of the input data DT11 is a more previous sample.

In the discriminator illustrated in Fig. 1, data conversion is performed as operation processing in each of the five layers, with the input data DT11 being used as input, and rightmost discrimination result data DT16 in the figure is obtained as output. In other words, the discrimination result data DT16 is calculated from the input data DT11 by performing data conversion five times in total from a convolutional layer 1 to a convolutional layer 3.

The discrimination result data DT16 is data of 1×1 (one dimension × one sample) that indicates a result of discrimination performed by the discriminator. In particular, for example, the discrimination result data DT16 is data that indicates the probability that sound based on the input data DT11 is specific sound determined in advance.

In the discriminator illustrated in Fig. 1, first, filtering processing is performed on the input data DT11 for each of the four types of filters in the convolutional layer 1. In other words, processing of convolving filter coefficients that make up a filter and the input data DT11 is performed for each of the four types of filters.

Each filter used in the convolution processing performed in the convolutional layer 1 is a 20×1-tap filter. In other words, the number of taps of each filter, that is, the number of filter coefficients is 20×1. Further, in the convolution processing performed using each filter, filtering processing providing a ten sample advance is performed.

The input data DT11 is converted into intermediate data DT12 by performing such convolution processing in the convolutional layer 1.

The intermediate data DT12 is data of four dimensions × 790 samples. In other words, the intermediate data DT12 includes pieces of data of the four respective dimensions arranged in the lateral direction in the figure, and the piece of data of each dimension includes 790 samples, that is, 790 pieces of data arranged in the longitudinal direction in the figure.

Next, in a pooling layer 1 that is the second layer, a data region of a ten sample width is set to be a target, and processing providing a ten sample advance is performed on the intermediate data DT12 obtained in the convolutional layer 1, the processing including picking (extracting) a maximum value from the data region.

In other words, in the pooling layer 1, a data region of a ten sample width is set to be a target, and pooling processing providing a ten sample advance is performed on the intermediate data DT12, the pooling processing including extracting a maximum value.

The intermediate data DT12 is converted into intermediate data DT13 by performing such pooling processing. Here, the intermediate data DT13 includes pieces of data of four dimensions, and the piece of data of each dimension includes 79 samples (pieces of data).

Here, referring to Fig. 2, the convolution processing in the convolutional layer 1 and the pooling processing in the pooling layer 1 are described.

For example, as illustrated on the left in Fig. 2, in the convolution processing in the convolutional layer 1 using one filter, 20 samples including a sample SP11, a sample SP12, and a sample SP13 of the input data DT11, and filter coefficients are convolved.

In other words, convolution processing of convolving each of the 20 samples from the sample SP11 to the sample SP13 that are included in a data region W11 and consecutively arranged in the time direction, and filter coefficients that make up a filter, is performed. Then, a value obtained by performing the convolution processing with the data region W11 being set to be a target, is a sample value of a sample SP21 situated on the lower left in the illustration of the intermediate data DT12.

The data region W11 is set to be a region of one dimension × 20 samples since the filter used to perform the convolution processing in the convolutional layer 1 is a 20×1-tap filter.

Further, since the number of sample advances for the convolution processing in the convolutional layer 1 is ten, that is, since the convolution processing in the convolutional layer 1 is convolution processing providing a ten sample advance, a data region W12 is set to be a processing-target region for convolution processing performed subsequently to the convolution processing performed with the data region W11 being set to be a target.

The data region W12 is a region that includes 20 consecutively arranged samples, where the sample SP12 is situated at the beginning of the data region W12, the sample SP12 being the tenth sample prior to the sample SP11 situated at the beginning of the data region W11. In other words, the data region W12 is a region obtained by displacing the data region W11 by ten samples in a past direction. Here, the data region W12 is a region that includes the sample SP12 to a sample SP14.

As in the case of the data region W11, in the convolution processing performed with the data region W12 being set to be a target, each of the 20 samples including the sample SP12 to the sample SP14 of the input data DT11, and filter coefficients are convolved. Then, a value obtained by performing the convolution processing with the data region W12 being set to be a target is a sample value of a sample SP22 that is the second sample in the upward direction from the lower left in the illustration of the intermediate data DT12.

In the convolutional layer 1, convolution processing is repeatedly performed by convolution processing being performed every time the processing-target data region is displaced by ten samples for each of the four filters to generate the intermediate data DT12. Each of the pieces of data of four dimensions in the intermediate data DT12 corresponds to each piece of data obtained by performing the convolution processing in the convolutional layer 1 using the four filters.

Further, in the pooling layer 1, a data region W21 that includes ten samples from the sample SP21 to the sample SP23 of the first dimension is set to be a processing target, and processing of extracting a maximum value is performed, the sample SP21 to the sample SP13 being consecutively arranged in the longitudinal direction.

In other words, the maximum value of sample values of the ten samples included in the data region W21 is a sample value of a sample SP31 situated on the lower left in the illustration of the intermediate data DT13.

When the data region W21 is set to be a target and the processing of extracting a maximum value is performed, a region that includes ten consecutively arranged samples is set to be a next data region, where a sample that is the tenth sample prior to the sample SP21 situated at the beginning of the data region W21, is situated at the beginning of the next data region. In other words, the processing-target data region is displaced by ten samples since the number of sample advances for the pooling processing in the pooling layer 1 is ten.

Then, a new data region obtained as described above is set to be a target, and processing of extracting a maximum value is performed. After that, similar processing is performed to convert the intermediate data DT12 into the intermediate data DT13.

Returning to the description of Fig. 1, when the intermediate data DT13 is obtained by performing the pooling processing in the pooling layer 1, convolution processing similar to the convolution processing in the convolutional layer 1 is performed in a convolutional layer 2 that is the third layer, using eight types of filters.

In other words, in the convolutional layer 2, using eight different filters whose number of taps is 10×4, that is, eight different 10×4-tap filters, convolution processing (filtering processing) providing a one sample advance is performed for each of the filters.

This results in the intermediate data DT13 being converted into intermediate data DT14 of eight dimensions × 70 samples. In other words, the intermediate data DT14 includes pieces of data of eight dimensions, and the piece of data of each dimension includes 70 samples (pieces of data).

In the pooling layer 2 that is the fourth layer, a data region of a ten sample width is set to be a target, and pooling processing providing a ten sample advance is performed on the intermediate data DT14, the pooling processing including extracting a maximum value. This results in the intermediate data DT14 being converted into intermediate data DT15 of eight dimensions × seven samples.

Further, in the convolutional layer 3 that is the fifth layer, convolution processing similar to the convolution processing in the convolutional layer 1 is performed using one type of filter.

In other words, in the convolutional layer 3, convolution processing (filtering processing) providing a one sample advance is performed using a 7×8-tap filter.

This results in the intermediate data DT15 being converted into the discrimination result data DT16 of one dimension × one sample, the discrimination result data DT16 being output of the discriminator, and the discrimination result data DT16 obtained as described above is output as a result of the discrimination processing performed on the input data DT11 (discrimination result).

The operation processing in the five layers from the convolutional layer 1 to the convolutional layer 3 is performed by the discriminator having a neural network structure.

By the way, in each layer of a discriminator having such a neural network structure, it is necessary to set, to be a target, all of the pieces of data obtained in operation processing performed in a most recent previous layer to perform operation processing in a current layer. Thus, the processing amount of operation processing and the memory amount of memory necessary to perform the operation processing become large.

Here, the application of frame processing to processing performed by the discriminator having the neural network structure illustrated in Fig. 1, is discussed.

The frame processing refers to performing processing on input data for each frame, that is, performing processing with a position of the beginning or the end of a frame of input data being set to be a start position of the processing. The frame processing is primarily applied in order to adjust the frequency of calculating output of a neural network, such as reducing a memory amount necessary to perform operation processing, or performing output, for example, once for 1024 samples of input data.

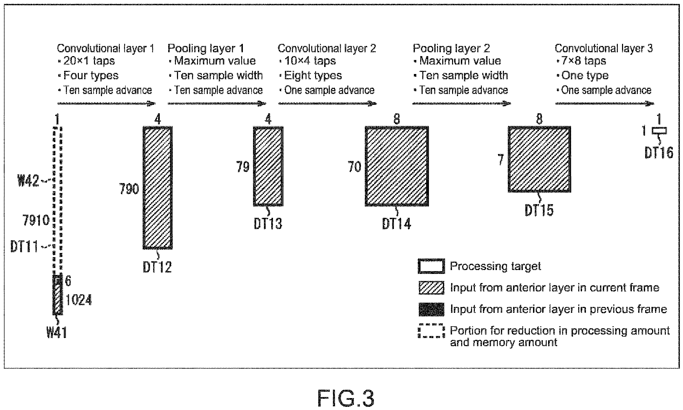

For example, as illustrated in Fig. 3, It is assumed that frame processing is applied to processing performed by a discriminator having a neural network configuration similar to that of Fig. 1. In other words, it is assumed that frame processing is performed that includes calculating the discrimination result data DT16 once for 1024 samples corresponding to one frame of the input data DT11. Note that a portion in Fig. 3 that corresponds to that in Fig. 1 will be denoted by the same reference symbol and a description thereof will be omitted as appropriate.

In Fig. 3, it is assumed that a temporally newest frame in the input data DT11 is a current frame. The current frame is an interval that includes 1024 consecutively arranged lowermost samples in the illustration of the input data DT11, and, in Fig. 3, a portion of the current frame in the input data DT11 is hatched.

In order to calculate one discrimination result data DT16 for the current frame of the input data DT11, convolution processing with a data region W41 being set to be a processing target is performed in the convolutional layer 1.

The data region W41 is an interval that includes 1030 samples in total that are 1024 samples included in the current frame, and last six samples in a frame temporally most recent previous to the current frame (hereinafter also referred to as a most recent previous frame).

In this case, with respect to convolution performed on data (an interval) other than a processing target in the current frame of the input data DT11, if it is possible to perform the convolution in a previous frame, this will result in being able to reduce operation processing performed on a data region W42 indicated by a dotted line, and a memory amount necessary to perform the operation processing.

However, the neural network configuration illustrated in Fig. 3 does not make it possible to perform such a reduction in operation processing and a memory amount. The reason is that processing boundaries of a current frame and a previous frame do not coincide.

Here, the processing boundary of a frame refers to, for example, a position of a sample in data at which operation processing performed on the frame is to be started, that is, a position at the beginning of the frame or at the end of the frame, or a position of a sample in the data at which next operation processing is to be started after the operation processing performed on the frame is finished.

For example, a processing boundary of the current frame is situated at a position of a sample in the input data DT11 at which next operation processing is to be started after operation processing performed on the current frame is finished. It is not possible to reduce an operation amount or a memory amount unless the position of a sample in the input data DT11 at which the next operation processing is to be started coincides with a position of a sample in the input data DT11 at which operation processing performed on a most recent previous frame adjacent to the current frame is started, that is, a position of a sample at the end of (a position of the last sample in) the most recent previous frame, the position of a sample at the end of the most recent previous frame being a position at which a processing boundary of the most recent previous frame is situated.

Specifically, for example, it is assumed that the nth sample from a lowermost sample in Fig. 3 that is included in the input data DT11 is the nth sample, where 1≤n. Thus, for example, a lowermost sample in the illustration of the input data DT11, that is, a sample at a newest point in time is the 1st sample.

In this case, in the convolutional layer 1, first, convolution processing using a 20×1-tap filter is performed in the current frame with respect to the 1st sample to the 20th sample that are included in the input data DT11.

Further, since the number of advances (the number of sample advances) in the convolutional layer 1 is ten samples, convolution processing using the 20×1-tap filter is subsequently performed on the 11th sample to the 30th sample.

After that, similar convolution processing is repeatedly performed, and, in the current frame, convolution processing using the 20×1-tap filter is performed on the 1011th sample to the 1030th sample that are included in the input data DT11 at the end.

The data region W41 in the input data DT11 is a processing-target data region for the convolution processing described up to this point, and, in the current frame, the convolution processing is performed with the data region W41 being set to be a processing-target region.

Further, when the convolution processing is performed on the 1011th sample to the 1030th sample, the 1021st sample to the 1040th sample are next targets for the convolution processing. Thus, the processing boundary of the current frame for the convolution processing is the 1021st sample.

In this case, the convolution processing was supposed to be performed on the 1021st sample to the 1040th sample in a most recent previous frame most recent previous to the current frame.

However, such convolution processing is not actually performed, and, when frame processing is performed, that is, when processing is performed for each frame, convolution processing is performed starting from the 1025th sample in the most recent previous frame, the 1025th sample being a frame boundary of the current frame.

In other words, the processing boundary of the most recent previous frame is the 1025th sample, and the 1025th sample and the 1021st sample corresponding to the processing boundary of the current frame are not the same.

Thus, with respect to the above-described convolution on data (an interval) other than processing-target data in the current frame, that is, the convolution performed starting from the 1021st sample, it is not possible to perform the convolution in the most recent previous frame, and this results in being unable to reduce a processing amount and a memory amount.

Further, due to the application of frame processing, the convolution processing in the convolutional layer 1 in the example of Fig. 3 is different from the convolution processing in the convolutional layer 1 described with reference to Fig. 1. In other words, the convolution processing is performed with respect to a data region different from the data region in the example described with reference to Fig. 1.

Thus, in order to perform convolution processing similar to the convolution processing in the example described with reference to Fig. 1, the processing described with reference to Fig.1 has to be performed on all of the input data DT11 for each set of 1024 samples corresponding to one frame, and this results in there being a need for a large number of processing amount and a large number of memory amount.

Thus, according to the present technology, frame processing that includes performing operation processing on input data for each frame is applied to obtain a neural network structure in which processing boundaries of a current frame and a previous frame for the frame processing coincide. This makes it possible to reduce at least a memory amount.

Specifically, according to the present technology, a discriminator is used that has a neural network structure in which, in at least one layer, the processing unit for operation processing performed on a frame in the layer is a magnitude determined by the shape of input data, or the number of sample advances for the operation processing is the number of advances determined by the shape of the input data.

In other words, in a discriminator having a neural network structure to which the present technology is applied, the processing unit and the number of sample advances for operation processing as well as a frame length (the number of samples in a frame) in each layer are determined such that processing boundaries of adjacent frames coincide.

Further, when frame processing is performed in a discriminator having a neural network structure and when the size of one frame (frame length) is determined in advance, it is sufficient if the processing unit and the number of sample advances for operation processing performed in a layer are determined considering not only the shape of input data but also the size of one frame (frame length) of the input data.

Here, as described above, the shape of data (data shape) is determined by the number of dimensions of the data and the number of pieces of data in each dimension (the number of data samples).

For example, the input data DT11 illustrated in Fig. 1 is data that includes 7910 samples in one dimension, and thus is data having a data shape of one dimension × 7910 samples. Further, for example, the intermediate data DT12 illustrated in Fig. 1 is data having a data shape of four dimensions ×790 samples.

Note that the magnitude of the processing unit for operation processing performed in a layer refers to a minimum unit for processing when operation processing for one frame is performed in the layer. In other words, for example, the magnitude of the processing unit refers to the size of a processing-target data region when similar processing is repeatedly performed multiple times by the processing being performed every time the data region is displaced in a layer, that is, the number of samples included in the data region.

Specifically, for example, in the case of the convolutional layer 1 described with reference to Fig. 1, the processing unit refers to a data region that includes 20 samples on which convolution processing (filtering processing) is once performed, and the data region is determined by the number of taps of a filter.

Further, for example, the pooling layer 1 described with reference to Fig. 1, the processing unit refers to a data region that includes ten samples and is a target for extracting a maximum value, and the data region is determined by a sample width.

As described above, it is possible to cause processing boundaries of adjacent frames for operation processing to coincide by performing discrimination processing using a discriminator having a neural network structure (configuration) in which operation processing in a layer is performed using the number of taps, the sample width (the size of a data region), and the number of sample advances that are determined according to the shape or the frame length of input data. This makes it possible to reduce at least the memory amount of memory temporarily necessary upon performing operation processing, and thus to perform discrimination more efficiently.

The present technology makes it possible to cause processing boundaries of adjacent frames for operation processing to coincide, for example, when there exists the input data DT11 corresponding to a few frames and processes on the frames are serially performed for each frame in a temporally past direction from a current frame, or when the frames of the input data DT11 are successively input for each frame and processes on the frames are serially performed for each frame in a temporally future direction from the current frame. Further, operation processing performed on a frame may be started at a sample situated at the beginning of the frame, or at a sample situated at the end of the frame.

Note that, here, an example in which the number of taps, the sample width, and the number of sample advances are determined according to the shape or the frame length of input data, is described. However, the length of input data, that is, the number of samples (the number of pieces of data) included in a frame may be determined according to the shape of the input data, such that processing boundaries of adjacent frames for operation processing coincide. In such a case, it is also possible to cause processing boundaries of adjacent frames for operation processing to coincide, and thus to perform discrimination more efficiently.

Here, a specific example of discrimination processing performed using a discriminator having a neural network structure to which the present technology is applied, is described.

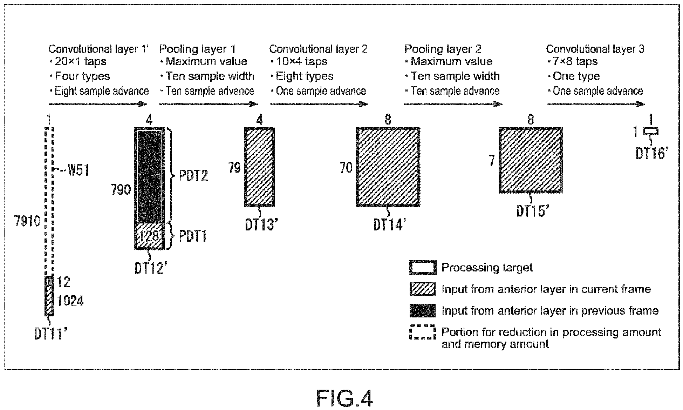

In a discriminator having a neural network structure to which the present technology is applied, processing is performed in each layer as illustrated in, for example, Fig. 4.

In other words, in the example illustrated in Fig. 4, processes in five respective layers are serially performed as discrimination processing using a discriminator, and discrimination result data DT16'that is a final discrimination result is calculated from input data DT11' of one dimension (one channel) that is audio data.

In particular, here, frame processing is performed for each frame, the frame processing including serially performing processes in five respective layers for each frame in the time direction serially from a previous frame to a future frame, and outputting the discrimination result data DT16' for each frame. In this example, one frame includes 1024 samples. In processing performed on one frame, the input data DT11' is input to the discriminator and one discrimination result data DT16' is output.

Note that, in Fig. 4, each rectangle represents data. Further, in the illustration of each piece of data, the longitudinal direction represents a time direction, and the lateral direction represents a dimension. In particular, in the illustration of each piece of data, the downward direction represents a direction of a newer point in time (a future direction).

Further, the arrows extending in the lateral direction in the figure represent data conversion. Here, the first layer is a convolutional layer 1', the second layer is the pooling layer 1, and the third layer is the convolutional layer 2. Further, the fourth layer is the pooling layer 2, and the fifth layer is the convolutional layer 3.

Since, from among the five layers, processes performed in the second to fifth layers that are the pooling layer 1 to the convolutional layer 3 are respectively similar to the processes in the second to fifth layers that are the pooling layer 1 to the convolutional layer 3 described with reference to Fig. 1, descriptions thereof will be omitted as appropriate.

In this example, the input data DT11' is data from the 1st sample to the 1036th sample from among the input data DT11 that is illustrated in Fig. 1 and includes 7910 samples, the 1st sample being a sample at a newest point in time.

Here, when one frame includes 1024 samples, an interval from the 1st sample to the 1024th sample in the input data DT11' corresponds to one frame. This frame is hereinafter referred to as a current frame.

Further, each of the samples from the 1025th sample to the 1036th sample in the input data DT11' are samples included in a most recent previous frame that is immediately ahead of the current frame.

In the convolutional layer 1', the input data DT11'including such data (samples) of the current frame and a portion of data of the most recent previous frame is input to perform convolution processing, and the input data DT11' is converted into intermediate data DT12'. Note that, more specifically, only data PDT1 that is a portion of the intermediate data DT12' of four dimensions × 790 samples, is obtained by the convolution processing in the convolutional layer 1' being performed in the current frame, and the rest of the intermediate data DT12', data PDT2, is obtained by convolution processing being performed in a previous frame.

In the convolution processing in the convolutional layer 1', using four types of filters whose number of taps is 20×1, that is, four types of 20×1-tap filters, convolution processing (filtering processing) providing an eight sample advance is performed on the input data DT11'for each of the filters.

In particular, frame processing performed for each frame is performed in the convolutional layer 1'. In other words, in the convolutional layer 1', convolution processing (filtering processing) that provides an eight sample advance and is performed using four types of 20×1-tap filters, is performed as operation processing performed on a frame for each frame.

In this case, with respect to processing performed on a current frame, a data region that includes all of the samples of the current frame is set to be a target region, and convolution processing is performed. Further, at a timing ahead of a timing at which the convolution processing is performed, a data region that includes all of the samples of a most recent previous frame is set to be a target region, and convolution processing is performed as operation processing performed in the convolutional layer 1'.

Further, in the pooling layer 1 that is the second layer, a data region of a ten sample width is set to be a target, and pooling processing providing a ten sample advance is performed on the intermediate data DT12', the processing including extracting a maximum value. This results in the intermediate data DT12' being converted into intermediate data DT13' of four dimensions × 79 samples.

In the convolutional layer 2 that is the third layer, using eight different filters whose number of taps is 10×4, convolution processing (filtering processing) providing a one sample advance is performed for each of the filters. This results in the intermediate data DT13' being converted into intermediate data DT14' of eight dimensions × 70 samples.

Further, in the pooling layer 2 that is the fourth layer, a data region of a ten sample width is set to be a target, and pooling processing providing a ten sample advance is performed on the intermediate data DT14', the pooling processing including extracting a maximum value. This results in the intermediate data DT14' being converted into intermediate data DT15' of eight dimensions × seven samples.

At the end, in the convolutional layer 3 that is the fifth layer, convolution processing providing a one sample advance is performed using a filter whose number of taps is 7×8, and the intermediate data DT15' is converted into the discrimination result data DT16' of one dimension × one sample. The discrimination result data DT16' obtained as described above is output as a result of the discrimination processing performed on the input data DT11' (discrimination result).

Here, the convolution processing in the convolutional layer 1' and the convolution processing in the convolutional layer 1 described with reference to Fig. 1 are compared. The number of sample advances is ten in the convolutional layer 1, whereas the number of sample advance is eight in the convolutional layer 1'.

As described above, when the number of sample advances is eight, in the current frame, convolution processing is performed with a data region from the 1st sample to the 20th sample being set to be a target, and, subsequently, convolution processing is performed with a data region from the 9th sample to the 28th sample being set to be a target.

After that, convolution processing is repeatedly performed by the convolution processing being performed every time the data region is displaced by eight samples, and, at the end, convolution processing is performed with a data region from the 1017th sample to the 1036th sample being set to be a target.

In this case, the 1017th sample is situated at the beginning of the data region for which the last convolution processing is performed. Thus, the 1025th sample, which is the eight sample prior to the 1017th sample in the time direction, is a processing boundary of the current frame.

Here, one frame corresponds to 1024 samples, and the 2015th sample is a sample situated at the end of (the last sample in) the most recent previous frame. Thus, the 1025th sample is a processing boundary of the most recent previous frame. Therefore, in the example illustrated in Fig. 4, the processing boundaries of the current frame and the most recent previous frame coincide, the current frame and the most recent previous frame being adjacent to each other. Particularly in this example, the position of a processing boundary of a frame is a position of a boundary of the frame. This results in convolution performed on data (an interval) other than a processing target in the current frame is performed in a previous frame.

More specifically, frame processing is performed in this example, and thus, one discrimination result data DT16' is calculated for input of 1024 samples of the input data DT11.

In this case, the input data DT11' from among the input data DT11 is set to be a processing-target data region, and the convolution processing in the convolutional layer 1' is performed.

Thus, in the current frame, it is not necessary to perform convolution processing with respect to a data region W51 of the input data DT11 that is illustrated in dotted lines. Thus, it is possible to reduce the processing amount of convolution processing by an amount corresponding to the data region W51, and the memory amount of memory necessary to hold, for example, data of the data region W51 of the input data DT11 to perform the unnecessary convolution processing.

Note that, in this case, by the convolution processing in the convolutional layer 1' being performed in the current frame, only the data PDT1 of four dimensions × 128 samples in the lower portion of the intermediate data DT12' in Fig. 4, is obtained, and the rest of the intermediate data DT12', the data PDT2, is not obtained.

However, the data PDT2 has been already obtained by the convolution processing in the convolutional layer 1' being performed in a plurality of frames temporally previous to the current frame. Thus, it is sufficient if the data PDT2 obtained by the convolution processing being performed in the plurality of temporally previous frames, is held. This makes it possible to obtain the intermediate data DT12' when the convolution processing performed in the convolutional layer 1' in the current frame is finished, and thus to subsequently start performing the processing in the pooling layer 1 immediately.

Further, the case of using a discriminator having a neural network structure in which processing boundaries of adjacent frames coincide only in the convolutional layer 1', has been described in Fig. 4. However, processing boundaries of adjacent frames may also coincide in a layer subsequent to the convolutional layer 1'.

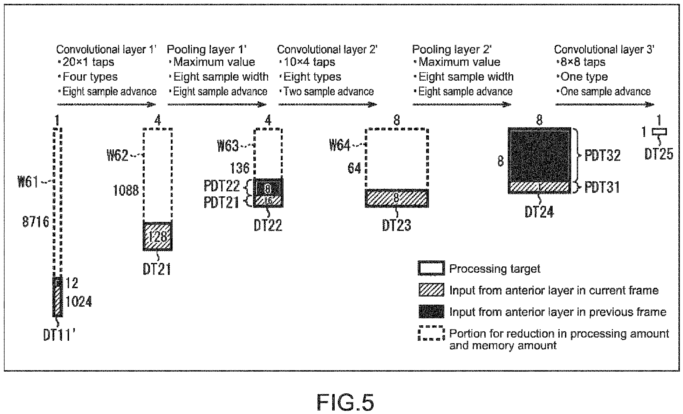

In such a case, processing is performed in each layer in a discriminator having a neural network structure to which the present technology is applied, as illustrated in, for example, Fig. 5. Note that a portion in Fig. 5 that corresponds to that in Fig. 4 will be denoted by the same reference symbol and a description thereof will be omitted as appropriate.

In the example illustrated in Fig. 5, processes in five respective layers are serially performed as discrimination processing using a discriminator, and discrimination result data DT25 that is a final discrimination result is calculated from the input data DT11' of one dimension (one channel) that is audio data.

In particular, here, frame processing is performed for each frame, the frame processing including serially performing processes in five respective layers for each frame in the time direction serially from a previous frame to a future frame, and outputting the discrimination result data DT25 for each frame.

Note that, in Fig. 5, each rectangle represents data. Further, in the illustration of each piece of data, the longitudinal direction represents a time direction, and the lateral direction represents a dimension. In particular, in the illustration of each piece of data, the downward direction represents a direction of a newer point in time (a future direction).

Further, the arrows extending in the lateral direction in the figure represent data conversion. Here, the first layer is the convolutional layer 1', the second layer is a pooling layer 1', and the third layer is a convolutional layer 2'. Further, the fourth layer is a pooling layer 2', and the fifth layer is a convolutional layer 3'.

Since processing exactly similar to the processing in the convolutional layer 1' described with reference to Fig. 4, is performed in the convolutional layer 1' that is the first layer from among the five layers, a description thereof will be omitted as appropriate.

The neural network structure illustrated in Fig. 5 is obtained by slightly changing the number of sample advances and the number of taps in each layer in the neural network structure illustrated in Fig. 1 such that processing boundaries of adjacent frames coincide in each layer.

As described above, the neural network structure illustrated in Fig. 5 is obtained by just slightly changing the neural network structure illustrated in Fig. 1, and thus such a change in neural network structure hardly affects discrimination performance.

In this example, frame processing is performed in the convolutional layer 1', with the input data DT11' being used as input, as in the case described with reference to Fig. 4.

In other words, in the convolutional layer 1', using four types of filters whose number of taps is 20×1, convolution processing providing an eight sample advance is performed on the input data DT11'for each of the filters as processing performed in a current frame. This results in the input data DT11' being converted into intermediate data DT21 of four dimensions × 128 samples. The intermediate data DT21 is the data PDT1 itself illustrated in Fig. 4.

As in the case of Fig. 4, such convolution processing in the convolutional layer 1' makes it possible to reduce a processing amount and a memory amount by an amount corresponding to a data region W61, compared to when frame processing is not applied.

Further, in the pooling layer 1' that is the second layer, a data region of an eight sample width is set to be a target, and pooling processing providing an eight sample advance is performed on the intermediate data DT21, the processing including extracting a maximum value. This results in the intermediate data DT21 being converted into intermediate data PDT21 of four dimensions × 16 samples.

Here, the sample width and the number of sample advances in the pooling layer 1' are determined according to the data shape or the frame length of the input data DT11' and according to processing performed in the convolutional layer 1', that is, the configuration (the structure) of the convolutional layer 1'. Thus, the pooling layer 1' makes it possible to cause processing boundaries of adjacent frames in the intermediate data DT21 to coincide, and thus to reduce a processing amount and a memory amount by an amount corresponding to a data region W62, compared to when frame processing is not applied.

In the convolutional layer 2' that is the third layer, using eight different filters whose number of taps is 10×4, convolution processing providing a two sample advance is performed for each of the filters.

Thus, in the convolutional layer 2', the shape of data used as input, that is, a target-processing data region includes four dimensions × 24 samples. On the other hand, the intermediate data PDT21 obtained by the processing performed in the pooling layer 1' in the current frame is data of four dimensions × 16 samples.

However, if intermediate data PDT22 of four dimensions × eight samples that is half the intermediate data obtained in the pooling layer 1' in a most recent previous frame that is immediately ahead of the current frame, is held, it is possible to obtain intermediate data DT22 of four dimensions × 24 samples from the intermediate data PDT21 and the intermediate data PDT22.

In the convolutional layer 2', using eight different filters whose number of taps is 10×4, convolution processing providing a two sample advance is performed on such intermediate data DT22 for each of the filters. This results in the intermediate data DT22 being converted into intermediate data DT23 of eight dimensions × eight samples.

The number of taps and the number of sample advances in the convolutional layer 2' are determined according to the data shape or the frame length of the input data DT11' and according to the configuration (the structure) of each of the layers anterior to the convolutional layer 2'. Thus, the convolutional layer 2' makes it possible to cause processing boundaries of adjacent frames in the intermediate data DT22 to coincide, and thus to reduce a processing amount and a memory amount by an amount corresponding to a data region W63, compared to when frame processing is not applied.

Further, in the pooling layer 2' that is the fourth layer, a data region of an eight sample width is set to be a target, and pooling processing providing an eight sample advance is performed on the intermediate data DT23, the pooling processing including extracting a maximum value. This results in the intermediate data DT23 being converted into intermediate data PDT31 of eight dimensions × one sample.

Here, the sample width and the number of sample advances in the pooling layer 2' are determined according to the data shape or the frame length of the input data DT11' and according to the configuration (the structure) of each of the layers anterior to the pooling layer 2'. Thus, the pooling layer 2' makes it possible to cause processing boundaries of adjacent frames in the intermediate data DT23 to coincide, and thus to reduce a processing amount and a memory amount by an amount corresponding to a data region W64, compared to when frame processing is not applied.

In the convolutional layer 3' that is the fifth layer, convolution processing providing a one sample advance is performed using a filter whose number of taps is 8×8.

Thus, in the convolutional layer 3', the shape of data used as input, that is, a target-processing data region includes eight dimensions × eight samples. On the other hand, the intermediate data PDT31 obtained by the processing performed in the pooling layer 2' in the current frame is data of eight dimensions × one sample.

However, if intermediate data PDT32 of eight dimensions × seven samples that is the intermediate data obtained in the pooling layer 2' in seven previous frames that are ahead of the current frame, is held, it is possible to obtain intermediate data DT24 of eight dimensions × eight samples from the intermediate data PDT31 and the intermediate data PDT32.

In the convolutional layer 3', using a filter whose number of taps is 8×8, convolution processing providing a one sample advance is performed on such intermediate data DT24. This results in the intermediate data DT24 being converted into the discrimination result data DT25 of one dimension × one sample. The discrimination result data DT25 obtained as described above is output as a result of the discrimination processing performed on the input data DT11' (discrimination result).

The number of taps and the number of sample advances in the convolutional layer 3' are determined according to the data shape or the frame length of the input data DT11' and according to the configuration (the structure) of each of the layers anterior to the convolutional layer 3'. Thus, the convolutional layer 3' makes it possible to cause processing boundaries of adjacent frames in the intermediate data DT24 to coincide.

As described above, when discrimination processing is performed using the discriminator having the neural network structure described with reference to Fig. 5, it is possible to reduce a processing amount and a memory amount up to about one-sixth while providing an equivalent performance, compared to the case of Fig. 1.

Note that an example of outputting one discrimination result data DT25 for 1024 samples (one frame) has been described in Fig. 5, but the frequency of output of the discrimination result data DT25 that is performed by the discriminator having the neural network structure described with reference to Fig. 5, may be once for a few frames. In this case, it is also possible to reduce a processing amount and a memory amount by an amount corresponding to the data region W61 to the data region W64.

Further, for a simple description, examples of using a relatively simple and small neural network have been described in Figs. 4 and 5. However, with respect to the size of a neural network, that is, the number of layers and the like, any size may be adopted. In the case of the present technology, the rate of reducing a processing amount and a memory amount is higher if a neural network is more complicated and larger.

Further, here, convolution processing and pooling processing have been described as an example of processing performed in layers of a neural network. Moreover, any operation processing such as residual processing may be performed. The residual processing is data conversion processing that includes adding, to data input to a current layer, output of a layer anterior to the current layer and obtaining output of the current layer.

Furthermore, the present technology is applicable not only to technologies regarding automatic discrimination performed on audio data, such as speech recognition, speaker identification, and environmental sound identification, but also to various technologies using a neural network.

For example, an example of applying the present technology to discrimination processing performed using a discriminator having a neural network structure, has been described above, and the present technology is also applicable to prediction processing performed using a predictor having a neural network structure, that is, regression processing.

In such a case, output of the predictor corresponds to the probability indicating a prediction result obtained by performing regression processing, and processing similar to the processing performed in each layer of the discriminator is performed in each layer of the predictor.

Specifically, for example, the present technology is applicable to a band expansion technology that generates a high-band signal of an audio signal (audio data) using a neural network, on the basis of a low-band signal of the audio signal.

For example, WO2015/79946 (hereinafter referred to as Reference Patent Document) discloses, as a band expansion technology, generating a high-band signal from low-band sub band powers of a plurality of low-band sub bands that are obtained from an audio signal, the high-band signal being a high-band component of the audio signal.

In other words, in Reference Patent Document, low-band sub band powers of an audio signal are obtained for each plurality of low-band sub bands, and estimation values of high-band sub band powers of a plurality of high-band sub bands situated on the high-band side of the audio signal are obtained as quasi-high-band sub band powers, on the basis of the obtained low-band sub band powers. Then, a high-band signal is generated on the basis of the quasi-high-band sub band powers.

Here, as indicated by Formula (2) disclosed in Reference Patent Document, the quasi-high-band sub band power is calculated in Reference Patent Document using coefficients obtained in advance by regression analysis performed using a least-square technique in which the low-band sub band powers are used as explanatory variables, and the high-band sub band powers are used as explained variables.

On the other hand, if the present technology is applied to the calculation of the quasi-high-band sub band power, it is possible to calculate the quasi-high-band sub band power with a higher degree of accuracy by using a neural network.

In such a case, for example, low-band sub band powers in each plurality of frames of an audio signal are used as input to a predictor having a neural network structure. Further, for example, high-band sub band powers (quasi-high-band sub band powers) of a plurality of high-band sub bands in an audio signal corresponding to one frame are used as output of the predictor having a neural network structure.

More specifically, for example, low-band sub band powers of four low-band sub bands each including 16 frames are used as input to the predictor having the neural network structure. Further, for example, high-band sub band powers of eight high-band sub bands each including one frame are used as output of the predictor.

In this case, the input to the predictor is input data of 16-by-4 matrix, that is, input data of four dimensions × 16 samples, and each sample of the input data represents a low-band sub band power of one low-band sub band. Further, the output of the predictor is discrimination result data of 1-by-8 matrix, that is, discrimination result data of eight dimensions × one sample, and each sample of the discrimination result data represents a high-band sub band power of one high-band sub band.

As described above, the present technology is also applicable to a band expansion technology using a neural network. Likewise, the present technology is also applicable to, for example, a technology for recognizing an image or a video and a technology for extracting a region of an object, using a neural network.

### <Regarding Compression-Encoding of Filter Coefficient>

By the way, when processing in a convolutional layer of a discriminator having a neural network structure is performed, filter coefficients of a filter that are determined in advance are used. Thus, there is a need for memory used to hold these filter coefficients.

Specifically, in a convolutional layer, it is necessary to hold as many filter coefficients as the number of taps × the number of types of filters. In other words, it is necessary to hold as many filter coefficients as the number of taps for each filter or each plurality of filters used to perform convolution.

Thus, if the number of convolutional layers or the number of filters used in a convolutional layer is increased, a memory amount necessary to hold filter coefficients is also increased by the increased number of convolutional layers or the increased number of filters.

Therefore, the present technology compression-encodes a filter coefficient to reduce the memory amount of memory necessary to hold the filter coefficient.

According to the present technology, the data amount of a filter coefficient is compressed by holding two tables that are a zero-coefficient position table and a non-zero coefficient table, the zero-coefficient position table indicating a position of a filter coefficient having a value of zero, that is, a position of a zero coefficient, the non-zero coefficient table indicating a value of a filter coefficient other than the zero coefficient.

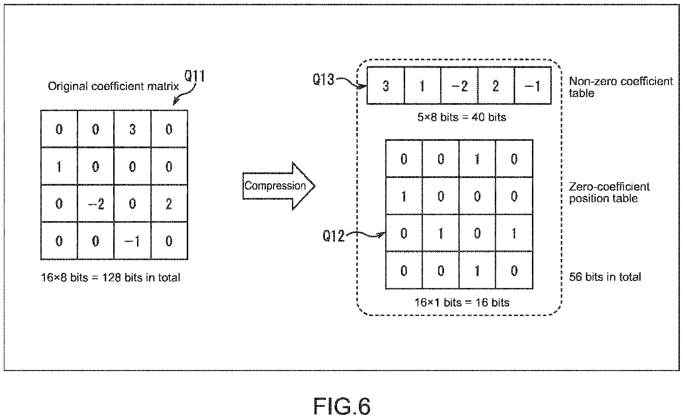

Specifically, for example, it is assumed that there exists a coefficient matrix that includes filter coefficients of 4×4 taps, as indicated by an arrow Q11 in Fig. 6. In this example, a rectangle in the coefficient matrix indicated by the arrow Q11 represents a filter coefficient, and a value in the rectangle represents a value of the filter coefficient.

According to the present technology, such a coefficient matrix is compression-encoded to be converted into a zero-coefficient position table indicated by an arrow Q12 and a non-zero coefficient table indicated by an arrow Q13.

The zero-coefficient position table indicated by the arrow Q12 is a table of 4×4, which is the same as the number of taps of the original coefficient matrix, and the value in a rectangle included in the zero-coefficient position table indicates whether the value of a filter coefficient in the coefficient matrix is 0 (zero), where the positional relationship of the filter coefficient in the coefficient matrix is the same as the positional relationship of the rectangle in the zero-coefficient position table.

In other words, when the value in a rectangle in the zero-coefficient position table is 0, this indicates that the value of a filter coefficient in the coefficient matrix is 0, where the positional relationship of the filter coefficient in the coefficient matrix is the same as the positional relationship of the rectangle in the zero-coefficient position table. Thus, for example, the value "0" in a rectangle on the upper left in the illustration of the zero-coefficient position table indicates that the value of a filter coefficient on the upper left in the illustration of the coefficient matrix is "0", where the positional relationship of the filter coefficient in the coefficient matrix is the same as the positional relationship of the rectangle in the zero-coefficient position table.

On the other hand, when the value in a rectangle in the zero-coefficient position table is 1, this indicates that the value of a filter coefficient in the coefficient matrix is not 0, where the positional relationship of the filter coefficient in the coefficient matrix is the same as the positional relationship of the rectangle in the zero-coefficient position table. Thus, for example, the value "1" in the second rectangle from the top on the leftmost side in the illustration of the zero-coefficient position table indicates that the value of the second filter coefficient from the top on the leftmost side in the illustration of the coefficient matrix is not "0", where the positional relationship of the filter coefficient in the coefficient matrix is the same as the positional relationship of the rectangle in the zero-coefficient position table.

Further, the non-zero coefficient table indicated by the arrow Q13 is a table that indicates a value of a filter coefficient in the original coefficient matrix that is not a zero coefficient, and the value of a rectangle in the non-zero coefficient table indicates a value of a filter coefficient in the coefficient matrix that is not a zero coefficient.

In this example, in the non-zero coefficient table, values of filter coefficients that are not a zero coefficient, that is, values of filter coefficients having a value "1" in the zero-coefficient position table are arranged in the order of raster scanning, with a filter coefficient on the upper left in the illustration of the coefficient matrix being used as a start point.

For example, the value "3" in a leftmost rectangle in the illustration of the non-zero coefficient table indicates that the value of the third filter coefficient from the left in the first row of the coefficient matrix is "3".

As described above, a coefficient matrix itself is not held, but a zero-coefficient position table and a non-zero coefficient table that are obtained by compression-encoding the coefficient matrix are held. This results in being able to reduce the memory amount of memory necessary to hold information used to obtain a filter coefficient.

For example, in the example illustrated in Fig. 6, when the value of one filter coefficient is eight bits, the data amount of the coefficient matrix is 128 (=16×8) bits since the coefficient matrix includes 16 filter coefficients.

On the other hand, when the value indicating whether one filter coefficient is a zero coefficient is one bit in the zero-coefficient position table, the data amount of the zero-coefficient position table is 16 (=16×1) bits.

Further, when the value of one filter coefficient is eight bits in the non-zero coefficient table, the data amount of the non-zero coefficient table is 40 (=5×8) bits since the number of filter coefficients that are not a zero coefficient is five.

Therefore, the sum of the data amount of the zero-coefficient position table and the data amount of the non-zero coefficient table is 56 (=40+16) bits. This shows that a data amount, that is, a memory amount is compressed by about half, compared to 128 bits, which is the data amount of the original coefficient matrix. The rate of compressing a coefficient matrix including filter coefficients is increased as the number of zero coefficients is increased.

Further, according to the present technology, the compression-encoding of a coefficient matrix also makes it possible to reduce a processing amount upon performing processing in a convolutional layer.

For example, in convolution processing using a coefficient matrix, matrix operation using the coefficient matrix is performed. Thus, operation of obtaining a product of a filter coefficient and convolutional-target data (multiplication processing), and operation of obtaining a sum of obtained products (addition operation) are performed with respect to all of the filter coefficients regardless of whether the filter coefficient is a zero coefficient.

On the other hand, when a coefficient matrix is compression-encoded, first, decoding processing is performed on the basis of a zero-coefficient position table and a non-zero coefficient table, and convolution processing is performed using a filter coefficient obtained as a result of the decoding processing.

Here, when decoding processing is performed, it is sufficient if only a filter coefficient corresponding to a position in the zero-coefficient position table that has a value that is not zero, is loaded from the non-zero coefficient table. Thus, for example, a processing amount upon performing decoding is smaller, compared to other compression methods such as Huffman coding.

Further, also in convolution processing performed after decoding processing, operation of obtaining a product of a filter coefficient and convolutional-target data (multiplication processing) and operation of obtaining a sum of obtained products (addition processing) are performed only with respect to a loaded filter coefficient. This makes it possible to reduce the processing amount of the convolution processing itself.

Consequently, if the number of zero coefficient becomes larger, the total processing amount of operation performed in decoding processing and in convolution processing becomes smaller than the processing amount of convolution processing using a coefficient matrix without any change, and the rate of reducing a processing amount is increased as the number of zero coefficients is increased.

Note that it is possible to increase the number of zero coefficients in a coefficient matrix upon performing coefficient learning in a neural network, using, for example, L1 regularization, L2 regularization, or regularization based on them. Thus, if the number of zero coefficients is appropriately adjusted using regularization when learning is performed in a discriminator having a neural network structure, it is possible to reduce a processing amount and a memory amount by compression-encoding a filter coefficient.

Note that regularization upon performing coefficient learning in a neural network is disclosed in detail in, for example, "Ian Goodfellow, Yoshua Bengio, and Aaron Courville, Deep Learning, The MIT Press, 2016".

### <Example of Configuration of Neural Network Processing Apparatus>

Next, a neural network processing apparatus to which the present technology described above is applied, is described.

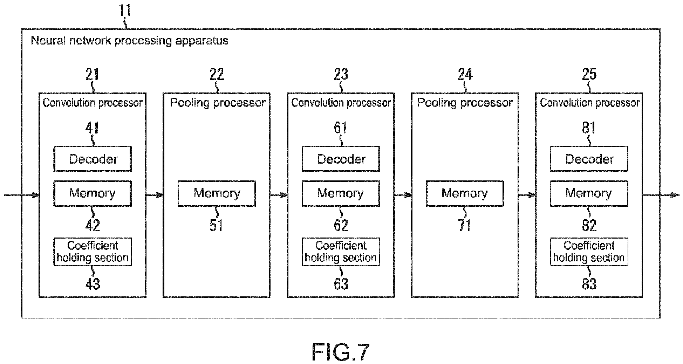

Fig. 7 illustrates an example of a configuration of an embodiment of a neural network processing apparatus to which the present technology is applied.

A neural network processing apparatus 11 illustrated in Fig. 7 is information processing apparatus that includes a discriminator having a neural network structure in which operation processing is performed in a layer using the number of taps, the sample width, and the number of sample advances that are determined according to the shape or the frame length of input data.

The neural network processing apparatus 11 performs operation processing in each layer of a neural network on the basis of supplied input data to perform discrimination processing on the input data, and outputs discrimination result data that indicates a result of the discrimination.

Note that, here, an example in which the neural network processing apparatus 11 is the discriminator having the neural network structure described with reference to Fig. 5, is described.

The neural network processing apparatus 11 includes a convolution processor 21, a pooling processor 22, a convolution processor 23, a pooling processor 24, and a convolution processor 25.

In this case, the discriminator having the neural network structure described with reference to Fig. 5 includes the convolution processor 21 to the convolution processor 25. In other words, the neural network includes the convolution processor 21 to the convolution processor 25.

The convolution processor 21 performs processing in the convolutional layer 1' on supplied input data, and supplies intermediate data obtained as a result of the processing in the convolutional layer 1' to the pooling processor 22.

The convolution processor 21 includes a decoder 41, a memory 42, and a coefficient holding section 43.

For example, the coefficient holding section 43 includes a nonvolatile memory. A zero-coefficient position table and a non-zero coefficient table are held in the coefficient holding section 43, the zero-coefficient position table and the non-zero coefficient table being obtained by compression-encoding a filter coefficient of a filter with respect to four different types of filters whose number of taps obtained by performing learning in advance is 20×1.

The decoder 41 performs processing of decoding a filter coefficient on the basis of the zero-coefficient position table and the non-zero coefficient table of each filter, and obtains a filter coefficient of the filter that is not a zero coefficient. The memory 42 includes, for example a volatile memory, and supplied input data and data on which operation is being performed are temporarily held in the memory 42.

The pooling processor 22 performs the processing in the pooling layer 1' on the intermediate data supplied by the convolution processor 21, and supplies intermediate data obtained as a result of the processing in the pooling layer 1' to the convolution processor 23. The pooling processor 22 includes a memory 51. The memory 51 includes, for example, a volatile memory, and the intermediate data supplied by the convolution processor 21 and data on which operation is being performed are temporarily held in the memory 51.

The convolution processor 23 performs the processing in the convolutional layer 2' on the intermediate data supplied by the pooling processor 22, and supplies intermediate data obtained as a result of the processing in the convolutional layer 2' to the pooling processor 24.

The convolution processor 23 includes a decoder 61, a memory 62, and a coefficient holding section 63.

For example, the coefficient holding section 63 includes a nonvolatile memory. A zero-coefficient position table and a non-zero coefficient table are held in the coefficient holding section 63, the zero-coefficient position table and the non-zero coefficient table being obtained by compression-encoding a filter coefficient of a filter with respect to eight different types of filters whose number of taps obtained by performing learning in advance is 10×4.

The decoder 61 performs processing of decoding a filter coefficient on the basis of the zero-coefficient position table and the non-zero coefficient table of each filter, and obtains a filter coefficient of the filter that is not a zero coefficient. The memory 62 includes, for example, a volatile memory, and the intermediate data supplied by the pooling processor 22 and data on which operation is being performed are temporarily held in the memory 62.

The pooling processor 24 performs the processing in the pooling layer 2' on the intermediate data supplied by the convolution processor 23, and supplies intermediate data obtained as a result of the processing in the pooling layer 2' to the convolution processor 25. The pooling processor 24 includes a memory 71. The memory 71 includes, for example, a volatile memory, and the intermediate data supplied by the convolution processor 23 and data on which operation is being performed are temporarily held in the memory 71.

The convolution processor 25 performs the processing in the convolutional layer 3' on the intermediate data supplied by the pooling processor 24, and outputs discrimination result data obtained as a result of the processing in the convolutional layer 3'.

The convolution processor 25 includes a decoder 81, a memory 82, and a coefficient holding section 83.

For example, the coefficient holding section 83 includes a nonvolatile memory. A zero-coefficient position table and a non-zero coefficient table are held in the coefficient holding section 83, the zero-coefficient position table and the non-zero coefficient table being obtained by compression-encoding a filter coefficient of a filter whose number of taps obtained by performing learning in advance is 8×8.

The decoder 81 performs processing of decoding a filter coefficient on the basis of the zero-coefficient position table and the non-zero coefficient table of the filter, and obtains a filter coefficient of the filter that is not a zero coefficient. The memory 82 includes, for example, a volatile memory, and the intermediate data supplied by the pooling processor 24 and data on which operation is being performed are temporarily held in the memory 82.

Note that an example in which the neural network processing apparatus 11 includes the discriminator having the neural network structure described with reference to Fig. 5, has been described above. However, the neural network processing apparatus 11 may include the discriminator having the neural network structure described with reference to Fig. 4.

In such a case, the processing in the convolutional layer 1' is performed by the convolution processor 21, the processing in the pooling layer 1 is performed by the pooling processor 22, the processing in the convolutional layer 2 is performed by the convolution processor 23, the processing in the pooling layer 2 is performed by the pooling processor 24, and the processing in the convolutional layer 3 is performed by the convolution processor 25.

### <Description of Discrimination Processing>

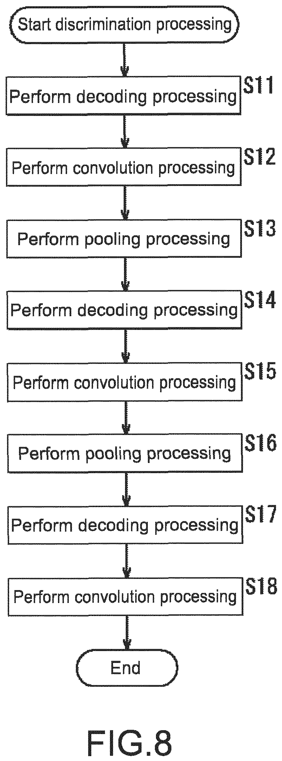

Next, the operation of the neural network processing apparatus 11 is described. In other words, discrimination processing performed by the neural network processing apparatus 11 is described below with reference to the flowchart illustrated in Fig. 8. Note that the discrimination processing is performed for each frame of input data.

In Step S11, the decoder 41 of the convolution processor 21 reads a zero-coefficient position table and a non-zero coefficient table from the coefficient holding section 43, and performs processing of decoding a filter coefficient on the basis of the zero-coefficient position table and the non-zero coefficient table. Further, the memory 42 of the convolution processor 21 temporarily stores therein supplied input data.

In Step S12, on the basis of filter coefficients of four filters that are obtained by performing the processing in Step S11, the convolution processor 21 performs convolution processing providing an eight sample advance for each of the four filters with respect to the input data stored in the memory 42. For example, in Step S12, only a filter coefficient that is not a zero coefficient is used to perform the convolution processing.

The convolution processor 21 supplies intermediate data obtained by performing the convolution processing to the memory 51 of the pooling processor 22, and causes the intermediate data to be temporarily stored in the memory 51.

Such convolution processing makes it possible to reduce the processing amount of the convolution processing and the memory amount of the memory 42 by an amount corresponding to the data region W61 illustrated in Fig. 5. Further, it is also possible to further reduce the processing amount of operation processing by an amount corresponding to the zero coefficient.

In Step S13, the pooling processor 22 sets a data region of an eight sample width to be a target, and performs pooling processing providing an eight sample advance with respect to the intermediate data stored in the memory 51, the pooling processing including extracting a maximum value. The pooling processor 22 supplies intermediate data obtained by performing the pooling processing to the memory 62 of the convolution processor 23, and causes the intermediate data to be temporarily stored in the memory 62.

Such pooling processing makes it possible to reduce the processing amount of the pooling processing and the memory amount of the memory 51 by an amount corresponding to the data region W62 illustrated in Fig. 5.

In Step S14, the decoder 61 of the convolution processor 23 reads a zero-coefficient position table and a non-zero coefficient table from the coefficient holding section 63, and performs processing of decoding a filter coefficient on the basis of the zero-coefficient position table and the non-zero coefficient table.

In Step S15, on the basis of filter coefficients of eight filters that are obtained by performing the processing in Step S14, the convolution processor 23 performs convolution processing providing a two sample advance for each of the eight filters with respect to the intermediate data stored in the memory 62. For example, in Step S15, only a filter coefficient that is not a zero coefficient is used to perform the convolution processing.

The convolution processor 23 supplies intermediate data obtained by performing the convolution processing to the memory 71 of the pooling processor 24, and causes the intermediate data to be temporarily stored in the memory 71.

Such convolution processing makes it possible to reduce the processing amount of the convolution processing and the memory amount of the memory 62 by an amount corresponding to the data region W63 illustrated in Fig. 5. Further, it is also possible to further reduce the processing amount of operation processing by an amount corresponding to the zero coefficient.

In Step S16, the pooling processor 24 sets a data region of an eight sample width to be a target, and performs pooling processing providing an eight sample advance with respect to the intermediate data stored in the memory 71, the pooling processing including extracting a maximum value. The pooling processor 24 supplies intermediate data obtained by performing the pooling processing to the memory 82 of the convolution processor 25, and causes the intermediate data to be temporarily stored in the memory 82.

Such pooling processing makes it possible to reduce the processing amount of the pooling processing and the memory amount of the memory 71 by an amount corresponding to the data region W64 illustrated in Fig. 5.

In Step S17, the decoder 81 of the convolution processor 25 reads a zero-coefficient position table and a non-zero coefficient table from the coefficient holding section 83, and performs processing of decoding a filter coefficient on the basis of the zero-coefficient position table and the non-zero coefficient table.

In Step S18, on the basis of filter coefficients of a filter that are obtained by performing the processing in Step S17, the convolution processor 25 performs convolution processing providing a one sample advance with respect to the intermediate data stored in the memory 82. For example, in Step S18, only a filter coefficient that is not a zero coefficient is used to perform the convolution processing. Such convolution processing makes it possible to reduce the processing amount of operation processing by an amount corresponding to the zero coefficient.

The convolution processor 25 outputs discrimination result data obtained by performing the convolution processing, and the discrimination processing is terminated.

As described above, the neural network processing apparatus 11 performs operation processing in each layer using the number of taps, the sample width, and the number of sample advances that are determined according to the shape or the frame length of input data, and generates discrimination result data. This results in being able to reduce a processing amount and a memory amount, and to perform discrimination more efficiently.

Further, the neural network processing apparatus 11 performs decoding processing on the basis of a zero-coefficient position table and a non-zero coefficient table that are held in advance, and performs convolution processing using a filter coefficient obtained as a result of the decoding processing. This results in being able to reduce the memory amount of memory used to hold a filter coefficient, and to also reduce the processing amount of the convolution processing by omitting product-sum operation performed on a portion corresponding to the zero coefficient.

Note that the neural network processing apparatus 11 may be used as the above-described predictor that predicts a high-band sub band power (a quasi-high-band sub band power) for band expansion.

In such a case, a low-band sub band power is input to the convolution processor 21 as input data, and the convolution processor 25 outputs a processing result of the convolution processing (an operation result) as a result of predicting a high-band sub band power. However, in this case, processing different from the processing described with reference to Fig. 5 is performed in each layer.

### <Example of Configuration of Computer>

By the way, the series of processes described above can be performed using hardware or software. When the series of processes is performed using software, a program included the software is installed on a computer. Here, examples of the computer include a computer incorporated into dedicated hardware, and a computer such as a general-purpose personal computer that is capable of performing various functions by various programs being installed thereon.

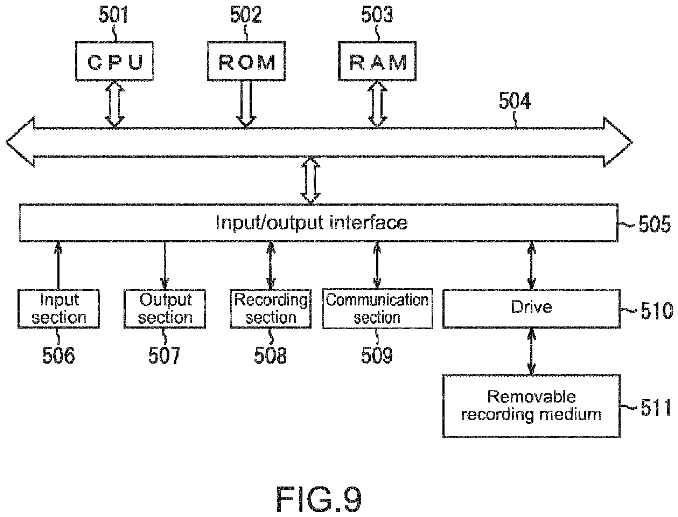

Fig. 9 is a block diagram of an example of a configuration of hardware of a computer that performs the series of processes described above using a program.

In the computer, a central processing unit (CPU) 501, a read only memory (ROM) 502, and a random access memory (RAM) 503 are connected to one another through a bus 504.

Further, an input/output interface 505 is connected to the bus 504. An input section 506, an output section 507, a recording section 508, a communication section 509, and a drive 510 are connected to the input/output interface 505.

The input section 506 includes, for example, a keyboard, a mouse, a microphone, and an imaging element. The output section 507 includes, for example, a display and a speaker. The recording section 508 includes, for example, a hard disk and a nonvolatile memory. The communication section 509 includes, for example, a network interface. The drive 510 drives a removable recording medium 511 such as a magnetic disk, an optical disk, a magneto-optical disk, or a semiconductor memory.

In the computer having the configuration described above, for example, the series of processes described above is performed by the CPU 501 loading a program stored in the recording section 508 into the RAM 503 and executing the program via the input/output interface 505 and the bus 504.

For example, the program executed by the computer (the CPU 501) can be provided by being stored in the removable recording medium 511 serving as, for example, a package medium. Further, the program can be provided via a wired or wireless transmission medium such as a local area network, the Internet, or digital satellite broadcasting.

In the computer, the program can be installed on the recording section 508 via the input/output interface 505 by the removable recording medium 511 being mounted on the drive 510. Further, the program can be received by the communication section 509 via the input/output interface 505 to be installed on the recording section 508. Moreover, the program can be installed in advance on the ROM 502 or the recording section 508.

Note that the program executed by the computer may be a program in which processes are chronologically performed in the order described herein, or may be a program in which processes are performed in parallel or a process is performed at a necessary timing such as a timing of calling.

Further, the embodiment of the present technology is not limited to the examples described above, and various modifications may be made thereto without departing from the scope of the present technology.

For example, the present technology may also have a configuration of cloud computing in which a plurality of apparatuses shares tasks of a single function and works collaboratively to perform the single function via a network.

Furthermore, the respective steps described using the flowchart described above may be shared by a plurality of apparatuses to be performed, in addition to being performed by a single apparatus.

Moreover, when a single step includes a plurality of processes, the plurality of processes included in the single step may be shared by a plurality of apparatuses to be performed, in addition to being performed by a single apparatus.

Further, the present technology may also take the following configurations.
(1) A neural network processing apparatus, including:
   an operation processor that configures a neural network and performs operation processing on each frame of input data, the operation processing being processing in which a processing boundary of a specified frame of the input data for the operation processing and a processing boundary of another frame of the input data for the operation processing coincide, the other frame being different from the specified frame.
(2) The neural network processing apparatus according to (1), in which
   the number of advances in the operation processing, the number of taps of a filter that includes a filter coefficient used to perform the operation processing, a size of a data region that is a target for the operation processing, or a frame length of the input data is determined such that the processing boundaries of the specified frame and the other frame for the operation processing coincide.
(3) The neural network processing apparatus according to (2), in which
   the number of advances, the number of taps, the size of the data region, or the frame length is determined according to a data shape of the input data.
(4) The neural network processing apparatus (3), in which
   the data shape of the input data is determined by the number of dimensions of the input data and the number of pieces of data in each dimension.
(5) The neural network processing apparatus any one of (1) to (4), in which
   the operation processing is convolution processing, pooling processing, or residual processing.
(6) The neural network processing apparatus according to any one of (1) to (5), in which
   the neural network processing apparatus is a discriminator having a neural network structure.
(7) The neural network processing apparatus according to any one of (1) to (6), in which
   the input data is a low-band sub band power of a low-band sub band of an audio signal, and
   the operation processor outputs a high-band sub band power of a high-band sub band of the audio signal.
(8) A neural network processing method, including
   performing, by an operation processor configuring a neural network, operation processing on each frame of input data, the operation processor being included in a neural network processing apparatus, the operation processing being processing in which a processing boundary of a specified frame of the input data for the operation processing and a processing boundary of another frame of the input data for the operation processing coincide, the other frame being different from the specified frame.
(9) A program that causes a computer to operate as a neural network processing apparatus that includes an operation processor configuring a neural network, the operation processor performing operation processing on each frame of input data, the operation processing being processing in which a processing boundary of a specified frame of the input data for the operation processing and a processing boundary of another frame of the input data for the operation processing coincide, the other frame being different from the specified frame.
(10) A neural network processing apparatus, including:
   a decoder that performs decoding processing of decoding a compression-encoded filter coefficient of a filter; and
   an operation processor that configures a neural network and performs convolution processing of convolving the filter coefficient obtained by performing the decoding processing, and input data.
(11) The neural network processing apparatus according to (10), in which
   the decoder performs the decoding processing on a basis of a zero-coefficient position table and a non-zero coefficient table that are obtained by the compression-encoding of the filter coefficient, the zero-coefficient position table indicating the filter coefficient having a value of zero, the non-zero coefficient table indicating a value of the filter coefficient that is not zero.
(12) The neural network processing apparatus according to (10) or (11), in which
   the operation processor performs the convolution processing only using the filter coefficient having a value that is not zero.
(13) A neural network processing method, including:
   performing, by a decoder, decoding processing of decoding a compression-encoded filter coefficient of a filter, the decoder being included in a neural network processing apparatus; and
   performing, by an operation processor configuring a neural network, convolution processing of convolving the filter coefficient obtained by performing the decoding processing, and input data, the operation processor being included in the neural network processing apparatus.
(14) A program that causes a computer to operate as a neural network processing apparatus that includes a decoder and an operation processor configuring a neural network,
   the decoder performing decoding processing of decoding a compression-encoded filter coefficient of a filter, and
   the operation processor performing convolution processing of convolving the filter coefficient obtained by performing the decoding processing, and input data.

### Reference Signs List

- 11: neural network processing apparatus
- 21: convolution processor
- 22: pooling processor
- 23: convolution processor
- 24: pooling processor
- 25: convolution processor
- 41: decoder
- 61: decoder
- 81: decoder

## Claims

1. A neural network processing apparatus, comprising
an operation processor that configures a neural network and performs operation processing on each frame of input data, the operation processing being processing in which a processing boundary of a specified frame of the input data for the operation processing and a processing boundary of another frame of the input data for the operation processing coincide, the other frame being different from the specified frame.

2. The neural network processing apparatus according to claim 1, wherein
the number of advances in the operation processing, the number of taps of a filter that includes a filter coefficient used to perform the operation processing, a size of a data region that is a target for the operation processing, or a frame length of the input data is determined such that the processing boundaries of the specified frame and the other frame for the operation processing coincide.

3. The neural network processing apparatus according to claim 2, wherein
the number of advances, the number of taps, the size of the data region, or the frame length is determined according to a data shape of the input data.

4. The neural network processing apparatus according to claim 3, wherein
the data shape of the input data is determined by the number of dimensions of the input data and the number of pieces of data in each dimension.

5. The neural network processing apparatus according to claim 1, wherein
the operation processing is convolution processing, pooling processing, or residual processing.

6. The neural network processing apparatus according to claim 1, wherein
the neural network processing apparatus is a discriminator having a neural network structure.

7. The neural network processing apparatus according to claim 1, wherein
the input data is a low-band sub band power of a low-band sub band of an audio signal, and
the operation processor outputs a high-band sub band power of a high-band sub band of the audio signal.

8. A neural network processing method, comprising
performing, by an operation processor configuring a neural network, operation processing on each frame of input data, the operation processor being included in a neural network processing apparatus, the operation processing being processing in which a processing boundary of a specified frame of the input data for the operation processing and a processing boundary of another frame of the input data for the operation processing coincide, the other frame being different from the specified frame.

9. A program that causes a computer to operate as a neural network processing apparatus that includes an operation processor configuring a neural network, the operation processor performing operation processing on each frame of input data, the operation processing being processing in which a processing boundary of a specified frame of the input data for the operation processing and a processing boundary of another frame of the input data for the operation processing coincide, the other frame being different from the specified frame.

10. A neural network processing apparatus, comprising:
a decoder that performs decoding processing of decoding a compression-encoded filter coefficient of a filter; and
an operation processor that configures a neural network and performs convolution processing of convolving the filter coefficient obtained by performing the decoding processing, and input data.

11. The neural network processing apparatus according to claim 10, wherein
the decoder performs the decoding processing on a basis of a zero-coefficient position table and a non-zero coefficient table that are obtained by the compression-encoding of the filter coefficient, the zero-coefficient position table indicating the filter coefficient having a value of zero, the non-zero coefficient table indicating a value of the filter coefficient that is not zero.

12. The neural network processing apparatus according to claim 10, wherein
the operation processor performs the convolution processing only using the filter coefficient having a value that is not zero.

13. A neural network processing method, comprising:
performing, by a decoder, decoding processing of decoding a compression-encoded filter coefficient of a filter, the decoder being included in a neural network processing apparatus; and
performing, by an operation processor configuring a neural network, convolution processing of convolving the filter coefficient obtained by performing the decoding processing, and input data, the operation processor being included in the neural network processing apparatus.

14. A program that causes a computer to operate as a neural network processing apparatus that includes a decoder and an operation processor configuring a neural network,
the decoder performing decoding processing of decoding a compression-encoded filter coefficient of a filter, and
the operation processor performing convolution processing of convolving the filter coefficient obtained by performing the decoding processing, and input data.
